# NEW EUROPEAN PATENT SPECIFICATION

(11) **EP 2 047 779 B2**
(45) Date of publication and mention of the opposition decision: **29.11.2017**
(45) Mention of the grant of the patent: 26.08.2009
(21) Application number: 08020408.4
(22) Date of filing: 08.04.2005
(51) Int. Cl.: A47J 31/44, A47J 31/60

(54) **Coffee machine**
Kaffeemaschine
Machine à café

(30) Priority: 21.04.2004 IT MI20040777
(43) Date of publication of application: 15.04.2009
(62) Divisional of application: 05755458.6
(73) Proprietor: De'Longhi SpA, 31100 Treviso (IT)
(72) Inventor: Marconi, Giancarlo, 31057 Silea (Treviso) (IT)
(74) Representative: Rapisardi, Mariacristina

(56) References cited:
- EP-A- 0 472 272
- EP-A- 0 791 321
- WO-A2-01/26520
- US-A- 5 473 972
- US-B1- 6 499 389

## Description

The present invention refers to a coffee machine having a device for producing a milk-based drink, in particular to a cappuccino, but more generally also to a coffee and milk drink without froth, or furthermore to a drink of just hot milk with or without froth.

It is known that in apparatuses for use in the home for preparing coffee or cappuccino there is a steam dispenser suitable for mixing the milk taken from a container with air to obtain a final emulsion of milk, air and steam that gives the drink the quantity of froth with the desired characteristics.

Such apparatuses suffer from some drawbacks, the greatest of which are those due to the awkwardness and poor versatility of use and to the difficulty of access to the inner parts for inspection.

Such apparatuses also do not have a system for cleaning the inner parts or have one that is not very effective so as to gradually bring about a deterioration of performance.

Moreover, the quality of the emulsion can often be penalised by the configuration and/or structural and/or functional characteristics of such conventional apparatuses. For example, the influence that the mixing operation of the milk with the air and the steam addition operation have upon each other, due to the fact that they are carried out in the same area, can have a negative influence upon the quality of the emulsion.

A coffee machine with a venturi element and an external milk container connected thereto are known from EP-A- 0791321 and WO01/26520A. The technical task proposed of the present invention is, therefore, that of making a coffee machine having a device for producing a milk-based drink that allows the aforementioned technical drawbacks of the prior art to be eliminated.

In this technical task a purpose of the invention is that of making a coffee machine having a device for producing a milk-based drink that is versatile and extremely easy to use.

A further purpose of the present invention is that of providing a coffee machine having a device for producing a milk-based drink that is easy to inspect and accessible in all of its parts.

Another purpose of the invention is that of providing a coffee machine having a device for producing a milk-based drink that has a system for cleaning the inner parts that is extremely effective so as to keep a high standard of performance.

Another purpose of the present invention is that of providing a coffee machine having an effective device for producing a milk-based drink such as to ensure that the drink always has the desired organoleptic characteristics.

The last but not least purpose of the present invention is that of providing a process for producing a cappuccino suitable for automatically carrying out both the brewing of coffee and the frothing of milk with a single command.

The technical task, as well as these and other purposes, according to the present invention, are accomplished by a coffee machine according to claim 1.

Other characteristics of the present invention are defined, moreover, in the following claims.

Further characteristics and advantages of the invention shall become clearer from the description of a preferred but not exclusive embodiment of the device for producing a milk-based drink according to the finding, illustrated for indicating and not limiting purposes in the attached drawings, in which:
- figure 1 shows a perspective view of the device for producing a milk-based drink of the present finding removed from the steam or hot water dispenser of the coffee machine;
- figure 2 shows a perspective view of the device of figure 1 connected to the steam or hot water dispenser of the coffee machine;
- figure 3 shows an axial section of the collector body of the device of figure 1;
- figure 4 shows a top side view of an axial section of the collector body and of the milk container of the device of figure 1;
- figure 5 shows another perspective view of the device of figure 1;
- figure 6 shows the device of figure 1 disassembled into its constituent parts;

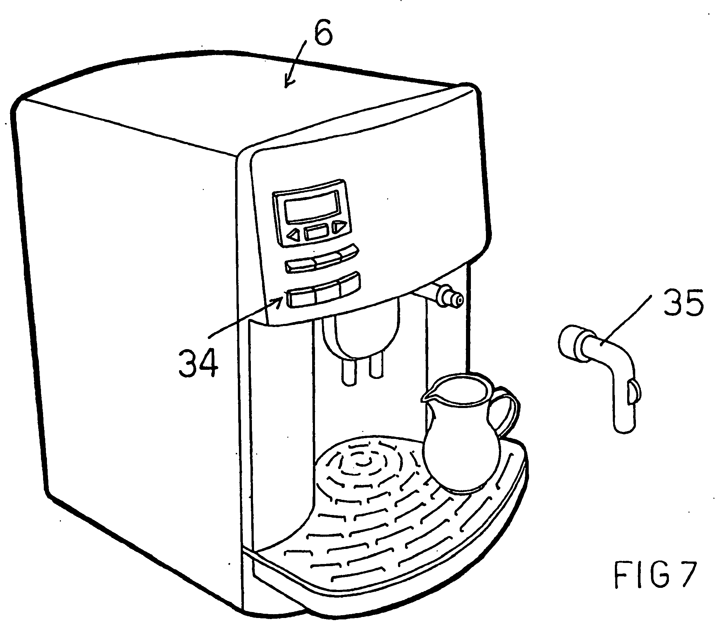

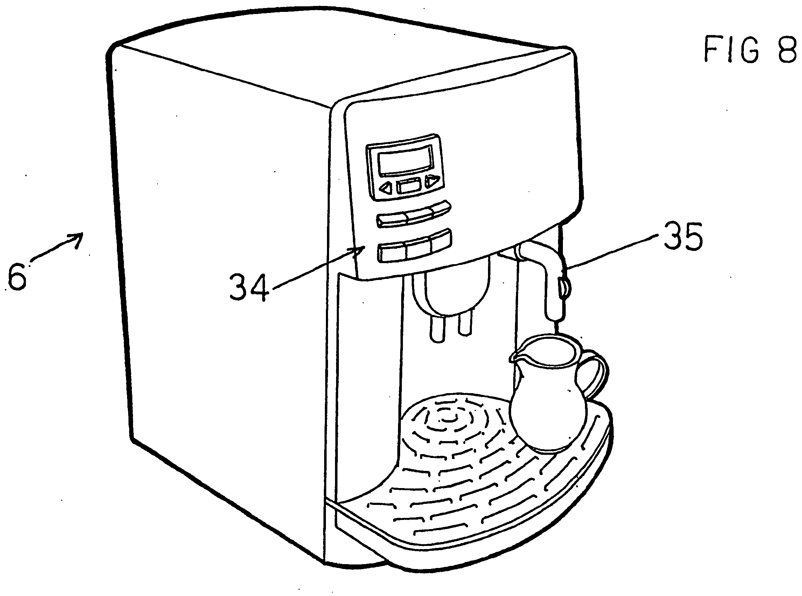

- figures 7 and 8 illustrate a coffee machine equipped with the original steam or hot water dispensing nozzle for the conventional production of a milk-based drink or other drinks;
- figure 9 shows a scheme of the water/steam circuit of a device according to the present invention;

Equivalent parts of the different embodiments of the device in the following description shall be indicated by the same reference numeral.

With reference to the quoted figures, a device for producing a milk-based drink is shown, wholly indicated with reference numeral 1.

The device 1 comprises a steam or hot water dispenser 5 and a container 2 for the milk that directly or indirectly carries a collector body 3 removably associated with the dispenser 5.

The collector body 3 internally defines a recess 300 into which a connection pathway 401 to the dispenser 5, a suction pathway 7 of the milk present in the container 2 and an air suction pathway 10 open.

The collector body 3 is carried by a cover 26 of the container 2, and according fo the invention, as illustrated, is formed integrally with it.

Preferably, the collector body 3 extends in a position outside and at the apex of a first side wall 14 of the container 2.

The steam or hot water dispenser 5 is that belonging to a coffee machine 6.

The collector body 3 also has a discharge 8 from the recess 300, to which a discharge nozzle 9 can be removably fitted.

The discharge nozzle 9 is rotatably connected to the discharge 8 of the collector body 3, between a rest position adjacent to the first side wall 14 of the container 2 and a work position distant from it.

In particular, the discharge nozzle 9 has its rotation axis arranged on the extension of the dispenser 5.

The discharge nozzle 9 also has a manual grip 15 for moving from rest position to work position and vice-versa.

The container 2 has a substantially quadrangular shape in plan, with a grip 18 at a second side wall 19 perpendicular to the axial extension of the steam or hot water dispenser 5, and a lip 20 formed in a third side wall 21 of the container 2 opposite the side wall 19.

The pouring lip 20 is suitable for pouring the milk when the device 1 is not connected to the coffee machine 6.

Advantageously, indeed, the container 2 can also be used independently to conserve milk in the refrigerator so as to make cold milk immediately available to the customer.

The container 2 has a pocket 22 formed outside of the first side wall 14 of the container 2 and below the discharge nozzle 9 to collect possible leakages of drops of liquid when the discharge nozzle 9 is in rest position.

The container 2 also has a substantially vertical supply channel of the milk from the bottom of the container 2 to the suction pathway 7 of the collector body 3, also formed outside the first side wall 14 of the container 2.

The suction pathway 7 has a portion connected with the milk supply channel 23.

The device 1 also has a flexible tube 25 that extends axially inside the milk supply channel 23 and projects at one end towards the bottom of the container 2 and at the other end inside the fitting portion 24 of the suction pathway 7.

The collector body 3, the milk supply channel 23, the discharge nozzle 9 and the collection pocket 22 are arranged in a recess of the first side wall of the container 2 to limit the overall bulk of the device 1.

The device 1 can comprise at least first scraping means 402 suitable for carrying out a cleaning scrape of the inner surface of the air suction pathway 10.

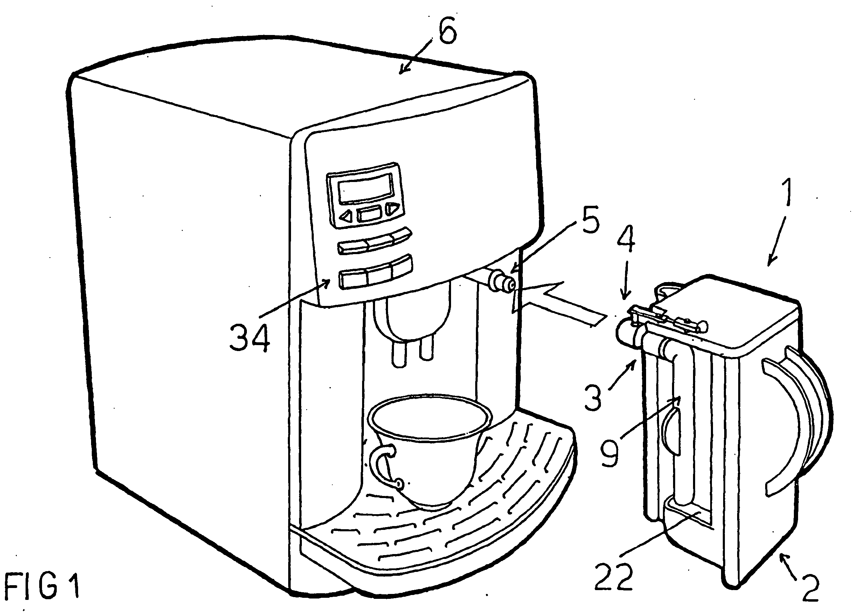

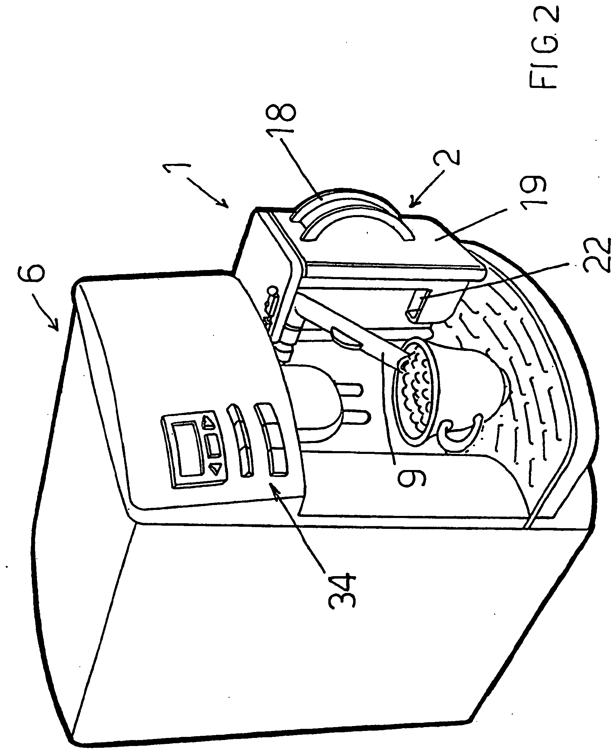

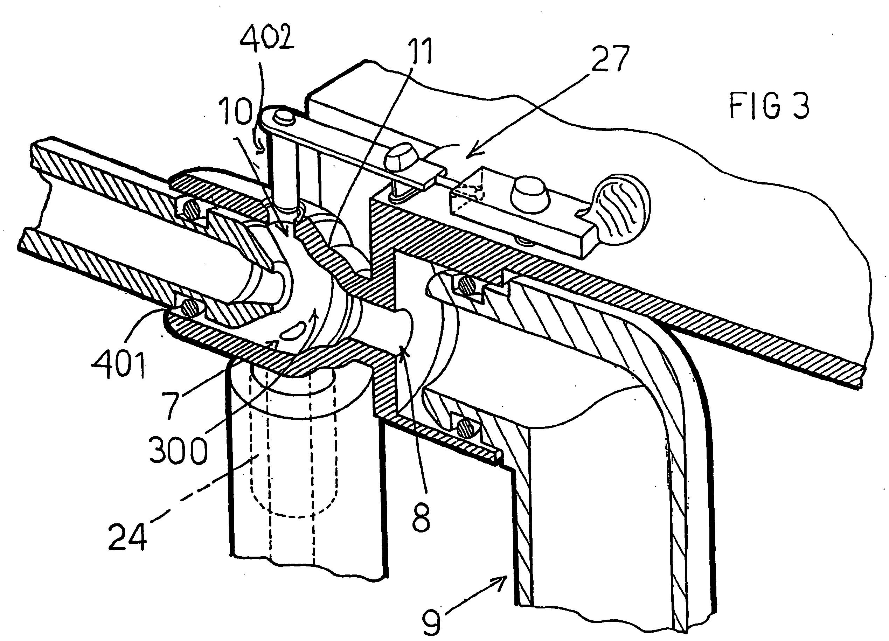

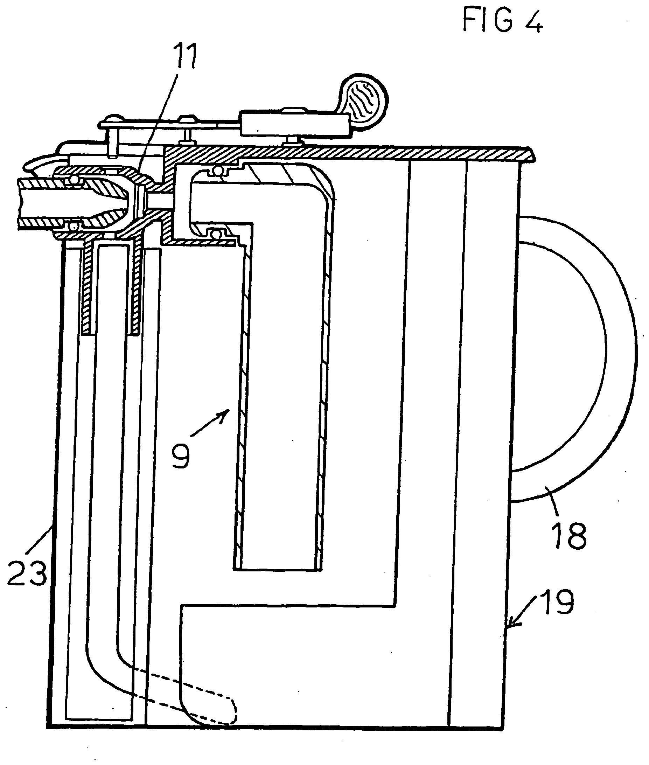

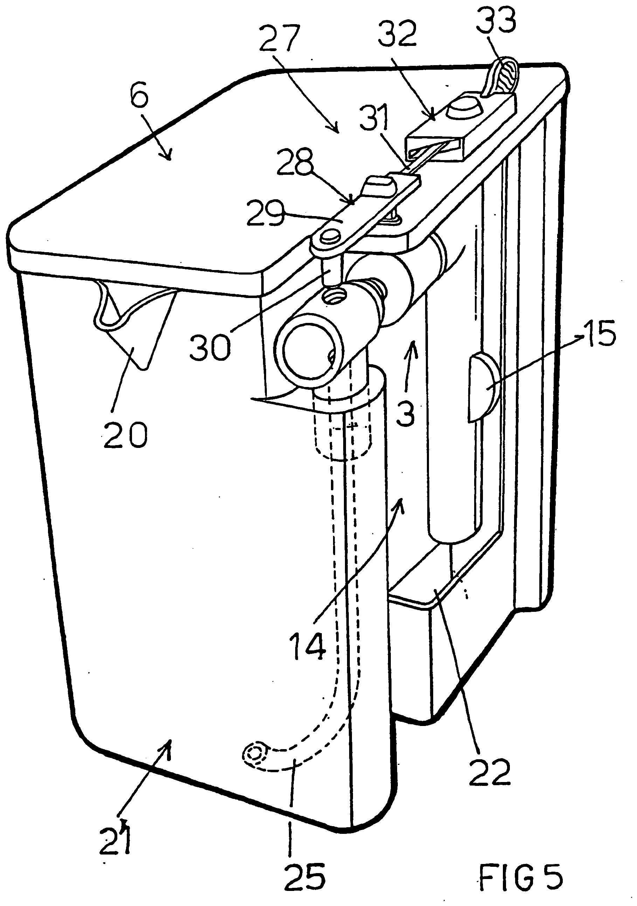

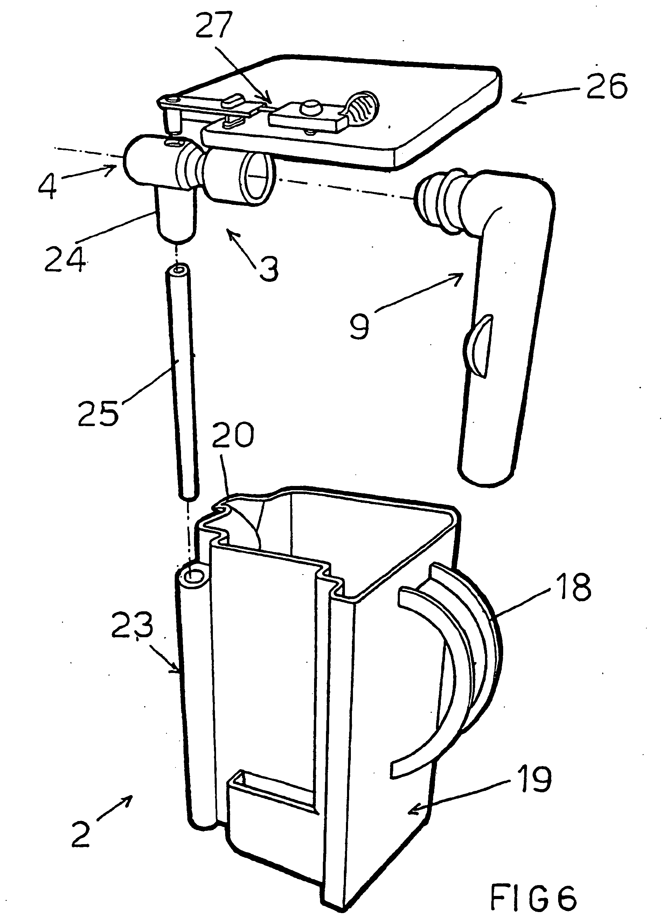

We shall now refer, in particular, to figures 1-6.

The pathway 4 and the discharge pathway 8 are arranged in parallel along the main axis of the collector body 3, whereas the milk inlet pathway 7 and the air inlet pathway 10 are arranged transversally to the main axis of the collector body 3 and diametrically opposite.

The flows from the pathways 7 and 10 and from the dispenser 5 mix in a single solution in the mixing chamber defined by the free portion of the recess 300 defined by the dispenser 5.

The recess 300 has a convergent portion 11, suitable for creating a Venturi effect that determines the sucking up of milk from the container 2 when it is crossed by the flow of steam.

The scraping means for cleaning the inner surface of the pathway 10 are actuated by a manually controlled leverism 27 pivoted directly on the cover 26.

The leverism 27 comprises a lever 28 that can be operated perpendicular to the lying plane of the cover 26 and having a first lever arm 29 carrying a scraping finger 30 of the third pathway 10 and a second lever arm 31 arranged in a guide pivoted on the cover 26 and rotatable parallel to the lying plane of the cover 26.

The guide 32 has a guide plane that is inclined with respect to the lying plane of the cover 26 so that a rotation in one direction and, respectively, in the opposite direction commands the lowering and raising, respectively, of the first lever arm 31 and consequently the extraction and introduction, respectively, of the scraping finger 30 into/from the pathway 10.

The control of the leverism 27 is carried out manually through an ear 33 integral with the guide 32.

The process for producing a cappuccino is briefly the following.

The coffee machine 6 has a keypad 34 having at least one button for commanding the production of a cappuccino and buttons for activating the functions of steam and water production to be sent to the dispenser 5.

The device 1 is associated with the coffee machine by introducing the dispenser 5 into the inlet pathway 4, and then the button for activating the steam function is pressed.

When the button that enables the production of a cappuccino is pressed, the control unit of the coffee machine automatically commands the preparation of a dose of brewed coffee in a cup positioned in a zone below the dispenser group of the coffee machine, the withdrawal of a predetermined amount of milk contained in the container 2 through the action of a steam flow sent by the dispenser 5 and the consequent controlled frothing of the milk through the effect of the air entering through the inlet pathway 10 of the collecting chamber 3, the interruption of the flow of steam when the predetermined amount of milk has been withdrawn, and the final conveying of the milk into the cup thanks to the discharge nozzle directed towards the zone below the dispenser group, for it to be mixed with the brewed coffee.

Clearly, it is possible to prepare the milk first and then the brewed coffee or vice-versa.

In the case in which its is wished to produce a coffee and milk-based drink without froth the same procedure described above is repeated actuating the means for adjusting the air flow so as to zero the air flow.

The coffee machine, through a suitable command, can also command the production of an exclusively frothed milk-based drink. In this case the same procedure described above is repeated eliminating the first step of producing a dose of brewed coffee in the cup.

After having removed the device 1 the dispenser 5 can once again have its nozzle 35 with which it was originally equipped connected. In this way, a cappuccino can be produced with the more conventional method, pressing the buttons for activating the steam production function, or else hot water can be produced for the preparation of a tea-based or other brew, pressing the buttons for activating the hot water production.

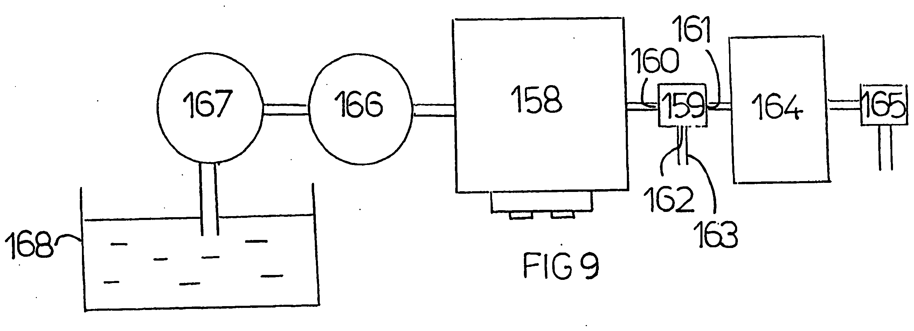

Now with reference to figure 9, a preferred embodiment of the hot water production circuit and of the steam production circuit is illustrated, which are both supplied by an electropump 166 controlled by a flowmeter 167 and suitable for withdrawing water from a reservoir 168.

The hot water circuit comprises a first boiler 158 (suitable for producing hot water) connected through a first valve (not shown) to the brewing chamber of the coffee machine.

The steam circuit extends from the first boiler 158 through a second electrovalve 159 having three pathways 160, 161 and 162 that puts the first boiler 158 in communication with a discharge line 163 and with a second boiler 164 for producing steam in turn connected to the steam dispenser 5 through a third electrovalve 165.

To produce a cappuccino, when the operator gives a single command, first of all the water circuit for the preparation of the brewed coffee is activated.

In this step the first valve is open, whereas the second and third electrovalve 159 and 165 remain closed and the electropump 166 is actuated until the flowmeter 167 has measured the passage into the first boiler 158 of a predetermined volume of water to make the brewed coffee.

Then the steam circuit for frothing the milk is activated.

In this step the first valve closes whereas the second electrovalve 159 opens the pathways 160 and 161 and keeps the pathway 162 of the discharge line closed, the third electrovalve 165 opens, and the electropump 166 is actuated until the flowmeter 167 has measured the passage into the second boiler 164 of a predetermined volume of water to make the steam necessary to froth the milk.

Finally, there follows a discharge step of the pressure of the steam, in which the second electrovalve 159 keeps the pathway 161 open, closes the pathway 160 and opens the steam discharge pathway 163.

Preferably, to limit the absorption of electrical energy the first and second boiler are selectively activated, possibly intermittently, and thus the water destined for the second boiler is not necessarily preheated in the first boiler.

Moreover, when the second boiler is activated the opening of the electrovalve 165 is delayed with respect to the starting of the electropump 166 so as to generate pressurised steam.

The coffee machine thus conceived can undergo numerous modifications and variants within the scope of the claims.

In practice, the materials used, as well as the sizes, can be whatever according to the requirements and the state of the art.

## Claims

1. Coffee machine having a steam or hot water dispenser (5) and a dispenser group for dispensing brewed coffee in a cup positionable in a zone below said dispenser group, and a device for producing a milk-based drink, said device comprising an inlet pathway (4) into which said steam or water dispenser (5) is horizontally introduced and a container (2) for the milk including a cover (26) integrally formed with a collector body (3) that defines an inner recess (300) into which a connection pathway (401) to said dispenser (5), a milk suction pathway (7) in said container (2) and an air suction pathway (10) open, said discharge nozzle. (9) being connected to a discharge pathway (8) of said collector body (3), wherein in a working position said discharge nozzle (9) is directed towards said zone below said dispenser group for conveying the milk into said cup to be mixed with said brewed coffee, said container (2) being removably associated with said dispenser (5) so as to be able to be separated from it for conservation of the milk present in said contained (2) wherein said discharge nozzle (9) is rotatably supported between a rest position adjacent to a side wall (14) of said container (2) and said working position distant from said side wall (14) of said container (2).

2. Coffee machine according to claim 1, wherein said discharge nozzle (9) is removably connected to a discharge pathway (8) of said collector body (3).

3. Coffee machine for producing a milk-based drink according to one or more of the previous claims, wherein said discharge nozzle (9) has its rotation axis arranged on the extension of the main axis of said collector body (3).

4. Coffee machine for producing a milk-based drink according to one or more of the previous claims, wherein said container (2) has a pocket (22) formed outside of said side wall (14) of said container (2) and below said discharge nozzle (9) to collect possible leakages of drops of liquid when said discharge nozzle (9) is in rest position.

5. Coffee machine for producing a milk-based drink according to one or more of the previous claims, wherein said container (2) has a pouring lip (20).

6. Coffee machine according to the claim 5, said coffee machine further comprising a hot water production circuit and a steam production circuit supplied by an electropump (166) controlled by a flowmeter (167).

7. Coffee machine according to the claim 6, wherein said hot water circuit comprises a first boiler (158) and said steam circuit extends from said first boiler (158) through an electrovalve (159) with three pathways (160, 161, 162) that puts said first boiler (158) in communication with a steam discharge line (163) and with a second boiler (164) for producing steam in turn connected to said dispenser (5) through a further electrovalve (165).

8. Coffee machine according to the claim 7, wherein said first and second boiler (158, 164) are selectively activated.

9. Coffee machine according to claims 7 or 8, **characterised in that** when said second boiler (164) is activated the opening of said further electrovalve (165) is delayed with respect to the actuation of said electropump (166) to pressurise the steam produced.

10. Coffee machine according to one or more of the preceding claims, wherein said collector body (3) has a discharge (8) from said inner recess (300) to which said discharge nozzle (9) is removably fitted.

11. Coffee machine according to one or more of the preceding claims, wherein said container (2) is removably associated with said dispenser (5) so as to be able to be separated from it for conservation of the milk present in said container (2) together with said cover (26), said collector body (3) and said discharge nozzle (9).

## Patentansprüche

1. Kaffeemaschine, aufweisend einen Dampf- oder Heißwasserspender (5) und eine Ausgabegruppe für die Ausgabe von gebrühtem Kaffee in eine Tasse, die in einem Bereich unterhalb der Ausgabegruppe positioniert werden kann, und eine Vorrichtung zur Zubereitung eines Milchgetränks, wobei diese Vorrichtung eine Einlassleitung (4) umfasst, in die der Dampf- oder Wasserspender (5) horizontal eingeführt wird, und einen Behälter (2) für die Milch einschließlich eines Deckels (26), einstückig ausgebildet mit einem Sammelkörper (3), der eine interne Vertiefung (300) definiert, in die sich eine Verbindungsleitung (401) zum Spender (5), eine Milchansaugleitung (7) in den Behälter (2) und eine Luftansaugleitung (10) öffnen, wobei die Ablassdüse (9) mit einer Ablassleitung (8) des Sammelkörpers (3) verbunden ist, wobei die Ablassdüse (9) in einer Arbeitsposition zum Bereich unterhalb der Ausgabegruppe gerichtet ist, um die Milch in die Tasse zu leiten, sodass sie mit dem gebrühten Kaffee vermischt wird, wobei der Behälter (2) entfernbar mit dem Spender (5) assoziiert ist, sodass er von ihm abgenommen werden kann, um die im Behälter (2) enthaltene Milch aufzubewahren, wobei die Ablassdüse (9) drehbar zwischen einer Ruheposition, angrenzend an eine Seitenwand (14) des Behälters (2), und der Arbeitspostion, die von der Seitenwand (14) des Behälters (2) entfernt ist, gestützt wird.

2. Kaffeemaschine nach Anspruch 1, wobei die Ablassdüse (9) entfernbar mit einer Ablassleitung (8) des Sammelkörpers (3) verbunden ist.

3. Kaffeemaschine zur Zubereitung eines Milchgetränks nach einem oder mehreren der vorhergehenden Ansprüche, wobei die Rotationsachse der Ablassdüse (9) auf der Ausdehnung der Hauptachse des Sammelkörpers (3) angeordnet ist.

4. Kaffeemaschine zur Zubereitung eines Milchgetränks nach einem oder mehreren der vorhergehenden Ansprüche, wobei der Behälter (2) eine Aussparung (22) aufweist, die außerhalb der Seitenwand (14) des Behälters (2) und unter der Ablassdüse (9) ausgebildet ist, um mögliche auslaufende Flüssigkeitstropfen zu sammeln, wenn die Ablassdüse (9) in der Ruheposition ist.

5. Kaffeemaschine zur Zubereitung eines Milchgetränks nach einem oder mehreren der vorhergehenden Ansprüche, wobei der Behälter (2) eine Ausgusstülle (20) aufweist.

6. Kaffeemaschine nach Anspruch 5, wobei die Kaffeemaschine zudem einen Heißwasserbereitungskreislauf und einen Dampferzeugungskreislauf umfasst, versorgt über eine Elektropumpe (166), die mittels eines Durchflussmessers (167) gesteuert wird.

7. Kaffeemaschine nach Anspruch 6, wobei der Heißwasserkreislauf einen ersten Kessel (158) umfasst und sich der Dampfkreislauf vom ersten Kessel (158) durch ein Magnetventil (159) mit drei Leitungen (160, 161, 162) erstreckt, das den ersten Kessel (158) mit einer Dampfablassleitung (163) und mit einem zweiten Kessel (164) in Kommunikation setzt, um Dampf zu erzeugen, der wiederum mit dem Spender (5) mittels eines weiteren Magnetventils (165) verbunden ist.

8. Kaffeemaschine nach Anspruch 7, wobei der erste und der zweite Kessel (158, 164) wahlweise aktiviert werden.

9. Kaffeemaschine nach Anspruch 7 oder 8, **dadurch gekennzeichnet, dass** die Öffnung des weiteren Magnetventils (165) im Vergleich zur Betätigung der Elektropumpe (166) verzögert wird, um den erzeugten Dampf mit Druck zu beaufschlagen, wenn der zweite Kessel (164) aktiviert wird.

10. Kaffeemaschine nach einem oder mehreren der vorhergehenden Ansprüche, wobei der Sammelkörper (3) einen Ablass (8) von der internen Vertiefung (300) aufweist, in den die Ablassdüse (9) entfernbar eingepasst ist.

11. Kaffeemaschine nach einem oder mehreren der vorhergehenden Ansprüche, wobei der Behälter (2) entfernbar mit dem Spender (5) assoziiert ist, sodass er von diesem abgenommen werden kann, um die im Behälter (2) enthaltene Milch aufzubewahren, zusammen mit dem Deckel (26), dem Sammelkörper (3) und der Ablassdüse (9).

## Revendications

1. Machine à café comportant un distributeur de vapeur ou d'eau chaude (5) et une unité de distribution servant à distribuer du café infusé dans une tasse pouvant être placée dans une zone en-dessous de ladite unité de distribution, et un dispositif servant à préparer une boisson à base de lait, ledit dispositif comprenant une voie d'entrée (4) dans laquelle ledit distributeur de vapeur ou d'eau (5) est introduit horizontalement et un récipient (2) prévu pour le lait incluant un couvercle (26) formé intégralement avec un corps de collecte (3) définissant un renfoncement interne (300) dans lequel une voie de raccordement (401) au dit distributeur (5), une voie d'aspiration de lait (7) dans ledit récipient (2) et une voie d'aspiration d'air (10) s'ouvrent, ladite buse d'évacuation (9) étant reliée à une voie d'évacuation (8) dudit corps de collecte (3), dans laquelle dans une position de travail, ladite buse d'évacuation (9) est orientée vers ladite zone située en-dessous de ladite unité de distribution pour acheminer le lait à mélanger au dit café infusé dans ladite tasse, ledit récipient (2) étant associé de façon amovible au dit distributeur (5) de manière à pouvoir être séparé de celui-ci pour la conservation du lait présent dans ledit récipient (2), dans laquelle ladite buse d'évacuation (9) est supportée de façon rotative entre une position de repos adjacente à ladite cloison latérale (14) dudit récipient (2) et ladite position de travail distante de ladite cloison latérale (14) dudit récipient (2).

2. Machine à café selon la revendication 1, dans laquelle ladite buse d'évacuation (9) est reliée de façon amovible à une voie d'évacuation (8) dudit corps de collecte (3).

3. Machine à café servant à préparer une boisson à base de lait selon l'une ou plusieurs des revendications précédentes, dans laquelle ladite buse d'évacuation (9) comporte son axe de rotation disposé sur l'extension de l'axe principal dudit corps de collecte (3).

4. Machine à café servant à préparer une boisson à base de lait selon l'une ou plusieurs des revendications précédentes, dans laquelle ledit récipient (2) possède un logement (22) formé à l'extérieur de ladite cloison latérale (14) dudit récipient (2) et en-dessous de ladite buse d'évacuation (9) pour recueillir d'éventuelles fuites provenant de gouttes de liquide lorsque ladite buse d'évacuation (9) se trouve dans la position de repos.

5. Machine à café servant à préparer une boisson à base de lait selon l'une ou plusieurs des revendications précédentes, dans laquelle ledit récipient (2) comporte un bec verseur (20).

6. Machine à café selon la revendication 5, ladite machine à café comprenant également un circuit de production d'eau chaude et un circuit de production de vapeur alimentés par une électropompe (166) commandée par un débitmètre (167).

7. Machine à café selon la revendication 6, dans laquelle ledit circuit d'eau chaude comprend une première chaudière (158) et ledit circuit de vapeur se prolonge de ladite première chaudière (158) à travers une électrovanne (159) à trois voies (160, 161, 162) mettant ladite première chaudière (158) en communication avec une conduite d'évacuation de vapeur (163) et avec une seconde chaudière (164), servant à produire de la vapeur, reliée à son tour au dit distributeur (5) par une électrovanne (165) supplémentaire.

8. Machine à café selon la revendication 7, dans laquelle lesdites première et seconde chaudières (158, 164) sont activées sélectivement.

9. Machine à café selon la revendication 7 ou 8, **caractérisée en ce que** lorsque ladite seconde chaudière (164) est activée, l'ouverture de ladite électrovanne (165) supplémentaire est retardée par rapport à l'actionnement de ladite électropompe (166) pour mettre sous pression la vapeur produite.

10. Machine à café selon l'une ou plusieurs des revendications précédentes, dans laquelle ledit corps de collecte (3) comporte une évacuation (8) à partir dudit renfoncement interne (300) à laquelle ladite buse d'évacuation (9) est montée de façon amovible.

11. Machine à café selon l'une ou plusieurs des revendications précédentes, dans laquelle ledit récipient (2) est associé de façon amovible au dit distributeur (5) de sorte à pouvoir être séparé de celui-ci pour la conservation du lait présent dans ledit récipient (2) avec ledit couvercle (26), ledit corps de collecte (3) et ladite buse d'évacuation (9).
